# EUROPEAN PATENT SPECIFICATION

(11) **EP 3 065 840 B1**
(45) Date of publication and mention of the grant of the patent: **24.10.2018**
(21) Application number: 14802703.0
(22) Date of filing: 04.11.2014
(51) Int. Cl.: B01D 25/38

(54) **A FILTER PRESS WITH A WASHING APPARATUS**
VORRICHTUNG ZUM WASCHEN VON FILTERTÜCHERN IN EINER FILTERPRESSE
APPAREIL DE LAVAGE DE TOILE DE FILTRATION DANS UN FILTRE-PRESSE

(30) Priority: 05.11.2013 FI 20136081
(43) Date of publication of application: 14.09.2016
(73) Proprietor: Outotec (Finland) Oy, 02230 Espoo (FI)
(72) Inventor: SUUTARI, Teppo, FI-54770 Heituinlahti (FI)
(74) Representative: Kolster Oy Ab
(86) International application number: PCT/FI2014/050827
(87) International publication number: WO 2015/067852

(56) References cited:
- EP-A2- 0 237 869
- WO-A1-94/07584
- GB-A- 2 046 117
- US-A- 3 633 651
- US-A- 4 129 137
- US-A- 4 448 221

## Description

### FIELD OF THE INVENTION

The present invention relates to a filter press with a washing apparatus according to the preamble of claim 1.

### BACKGROUND OF THE INVENTION

Filter presses are used to separate solid components and liquid component in muddy water of earth and soil or slag from each other, and in particular to treat slurry which can relatively easily be filtered.

A filter press comprises a pack of vertically oriented filter plates. Each pressure filter in the filter press is a recessed plate membrane filter in which the chambers (plates) are vertically oriented in the pack. The plate pack is located between two rigid plates that are opened and closed by hydraulic cylinders. In the closed position, the plates form a solid plate pack of sealed chambers with two filter cloths between each pair of filter plates. The process liquids enter into the filter through slurry distribution channels that are formed when the plate pack is closed. The slurry is pumped into all chambers simultaneously to form a filter cake on both sides of the chamber. During filtration the solids are captured by the filter cloth on both sides of the chamber to form a cake with the filtrate displaced through the cloth. The liquid passes through the filter cloth and is extracted through liquid distribution channels from the filter press. After completion of the filtration, the plate pack is openend and the cake is discharged.

Prior art washing apparatuses used in filter presses are based on a spray bar supported on a portal. The portal is supported on a sub-frame which is supported on the filter press. The portal moves in the longitudinal direction of the filter press. The portal can thus be moved and stopped at each opening between two filter plates. The spray bar is then lowered between the pair of filter plates to the lower edge of the filter plates and raised back above the upper edge of the filter plates. Washing liquid is sprayed from the spray outlets towards the filter cloths situated at both sides of the spray bar during the vertical back and forth movement of the spray bar. The prior art washing devices require a considerable space above the filter plates. The required space above the filter plates equals to the hight of the filter plate plus a little bit extra height. The spray bar is normally supported on vertical support bars, which are supported on the horizontal portion of the portal. The vertical support bars move the spray bar in the vertical direction from the upper edge of the filter plate to the lower edge of the filter plate and back again. The vertical support bars will thus extend a distance at least equal to the height of the filter plates above the filter plates when the spray bar is moved above the filter plates to the next space between two filter plates. The time to lower and raise the spray bar and move the spray bar to the next space becomes rather long in prior art solutions.

FR 2 983 083 discloses a washing unit for a filter press. The spray bar is supported on a portal moving on the horizontal side supports of the filter press. The spray bar is supported with vertical support bars on the horizontal portion of the portal. The vertical support bars extend upwards above the horizontal portion of the portal.

GB 2 046 117 discloses an apparatus for removing filter cake in a filter press. Figure 12 discloses an articulated pantograph operated by an air cylinder. The air cylinder extends and retracts the pantograph so that a spray bar attached to an outer end of the pantograph moves vertically upwards and downwards along the surface of the filter plates in a filter press. The spray bar remains in the horizontal position during the movement.

WO 94/07584 discloses a filter press plate shifter. Figures 10A and 10B disclose an articulated pantograph operated by an air cylinder. The air cylinder extends and retracts the pantograph so that a spray bar attached to an outer end of the pantograph moves vertically upwards and downwards along the surface of the filter plates in a filter press. The spray bar remains in the horizontal position during the movement.

US patent 4,448,221 discloses a system with a double pivotable connection for moving and retracting a spray bar over the filter plates in a filter press and away from the filter plates.

US patent 4,129,137 discloses a system with several pivotable joints for moving and retracting a spray bar in a filter press.

EP patent application 0 237 869 discloses a robotic double pivoting arm which can be used to sweep a spray bar through the surface of filter plates in a filter press.

US patent 3,633,651 discloses a system with several pivotable joints for moving and retracting a spray bar through the surface of filter plates in a filter press.

### BRIEF DESCRIPTION OF THE INVENTION

An object of the present invention is to present a filter press with an improved apparatus for washing filter cloths between the filter plates.

The object of the invention is achieved with a filter press according to the independent claim 1. Preferred embodiments of the invention are disclosed in the dependent claims.

The filter press comprises a pack of vertical filter plates with filter cloths positioned between each pair of filter plates, the pack of filter plates being positioned between two end plates, at least one of the end plates being movable in order to close and open the pack of filter plates, a support structure extending horizontally in a longitudinal direction above the pack of filter plates, and at least one apparatus for washing the filter cloths, said washing apparatus comprising:
a carrier supported on the support structure, said carrier being movable along the support structure in the longitudinal direction,
a support arm being composed of two link arms, a first end of a first link arm being attached to the carrier with a first articulated joint, a second end of the first link arm being attached to a first end of the second link arm with a third articulated joint,
a spray bar being attached to a second end of the second link arm with a second articulated joint,
actuator means for turning the first link arm around the first articulated joint,
first transmission means for turning the second link arm around the third articulated joint in synchronism with the turning of the first link arm, the first transmission means comprising a first cogwheel or cogged belt pulley supported rotatably on the carrier with an axis in the first articulated joint, a second cogwheel or cogged belt pulley supported rotatably on an axis in the third articulated joint, and a first chain or cogged belt forming a closed loop around the first cogwheel and the second cogwheel,
second transmission means for turning the spray bar around the second articulated joint in synchronism with the turning of the second link arm, the second transmission means comprising a third cogwheel or cogged belt pulley supported rotatably on an axis in the third articulated joint, a fourth cogwheel or cogged belt pulley supported rotatably on an axis in the second articulated joint, and a second chain or cogged belt forming a closed loop around the third cogwheel and the fourth cogwheel,
whereby the actuator means moves the spray bar in a plane between a spaced apart pair of filter plates downwards to a lower edge of the filter plates and upwards above an upper edge of the filter plates in order to wash the filter cloths between two spaced apart filter plates and the carrier moves the support arm and the spray bar in the longitudinal direction.

The washing apparatus requires less space above the pack of filter plates compared to prior art solutions. The rack and the carrier are basically the only equipment in the washing device requiring space above the pack of filter plates. The height of the folded support arm and the spray bar does not essentially exceed the height of the support structure and the carrier. The height of the washing apparatus is thus rather low when the support arm is in the folded position.

The washing apparatus can be made rather light.

The structure of the washing apparatus is modular. Several carriers with their own support arm and spray bar can be installed on a common support structure. This makes it possible to wash several spaced apart pairs of filter plates simultaneously. Each washing apparatus can be provided with an actuator for operating the support arm. The other possibility is to have one common actuator operating all the support arms of the washing apparatuses. Each washing apparatus can also be provided with a motor for moving the carrier along the support structure. The other possibility is to have a common motor for moving all the carriers of the washing machines.

The time for the spray bar to pass down to the lower horizontal edge of the filter plate and up again above the upper horizontal edge of the filter plate is shorter in the washing apparatus according to the invention compared to prior art solutions. The spray bar must naturally move with a moderate speed upwards and the downwards between a spaced apart pair of filter plates in order for the washing of the cloths to be effective enough.

Also the time required to transfer the washing apparatus between two different pairs of filter plates in the longitudinal direction of the filter press is shorter in the washing apparatus compared to prior art solutions.

This is due to the fact that the washing apparatus can be made lighter compared to prior art solutions. This is also due to the fact that the centre of gravity of the washing apparatus according to the invention is in the rest position situated lower compared to prior art solutions. The dynamic forces during acceleration and deceleration remain on a lower level in the washing apparatus compared to prior art solutions.

The total time required to wash all the filter cloths in the filter press will thus be shorter with the washing device compared to prior art solutions.

### BRIEF DESCRIPTION OF THE DRAWINGS

In the following the invention will be described in greater detail by means of example embodiments with reference to the accompanying drawings, in which
Figure 1 is a top view of a filter press,
Figure 2 is a side view of the filter press of figure 1,
Figure 3 is a side view of a filter plate in the filter press,
Figures 4 is a cross-section of three filter plates,
Figure 5 shows an apparatus for washing filter cloths in the filter press,
Figure 6 shows first transmission means of the washing apparatus shown in figure 5,
Figure 7 shows second transmission means of the washing apparatus shown in figure 5.

### DETAILED DESCRIPTION OF EMBODIMENTS OF THE INVENTION

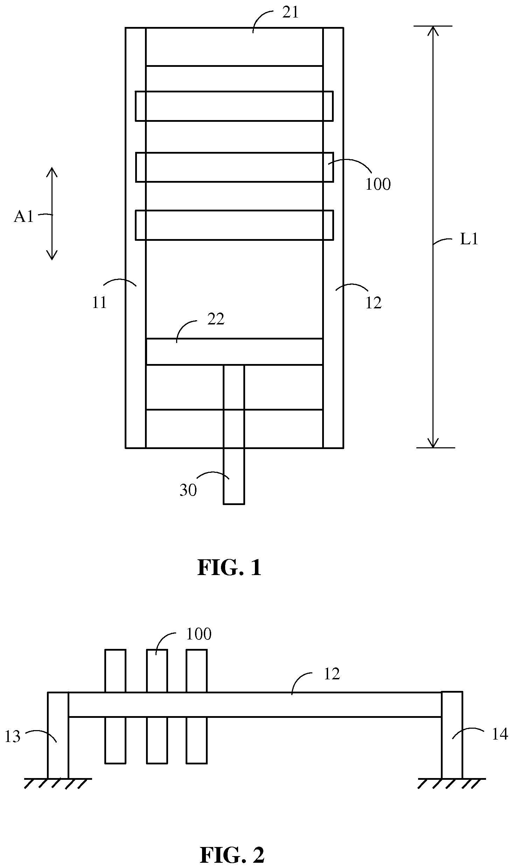

Figure 1 is a top view of a filter press. Figure 2 is a side view of the filter press of figure 1. The filter press comprises a frame formed of two parallel horizontal side bars 11, 12, a pack of vertical filter plates 100, a first end plate 21 and a second end plate 22. The first end plate 21 is fixed and the second end plate 22 is movable with a first actuator 30 in a longitudinal direction A1 of the filter press. The first actuator 30 can be a hydraulic cylinder-piston apparatus. The second end plate 22 can be moved with the first actuator 30 so that the pack of filter plates 100 is pressed together between the end plates 21. 22. The filter plates 100 are supported at the side bars 11, 12. The side bars 11, 12 are supported with vertical support bars 13, 14 on the floor of the building. The filter press has a length L1.

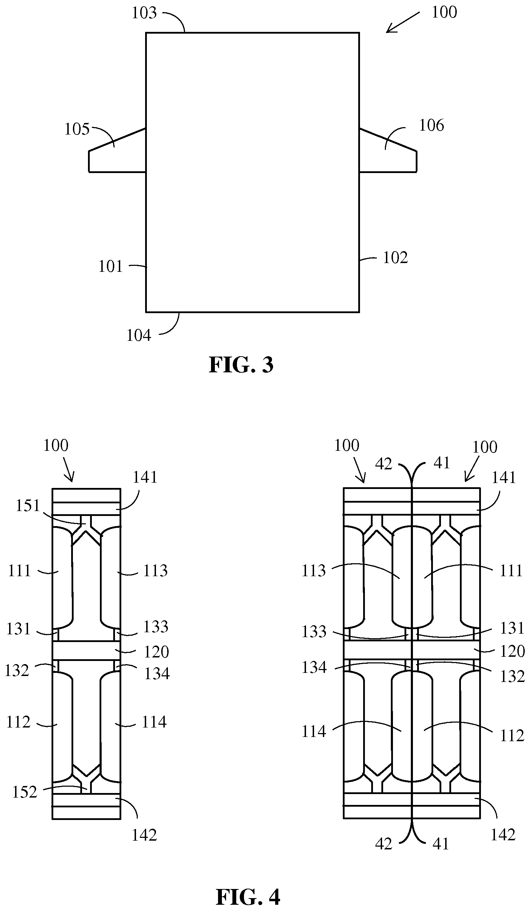

Figure 3 is a side view of a filter plate in the filter press. The filter plate 100 has a rectangular form with two opposite vertical side edges 101, 102 and two opposite horizontal side edges 103, 104. The filter plate 100 is equipped with support members 105, 106 at respective vertical side edges 101, 102 of the filter plate 100. The filter plate 100 rest through the support members 105, 106 on the side bars 11, 12. The filter press can be of a so called quick opened type where all the filter plates 100 open simultaneously or of a conventional type where the filter plates 100 open one at a time.

Figure 4 is a cross-section of three filter plates. The left side of the figure shows a single filter plate. The opposite side surfaces of the filter plate 100 comprises two first recesses 111, 112, 113, 114. There is further a first slurry channel 120 passing through the middle of the filter plate 100. The first slurry channel 120 is connected with second recesses 131, 132, 133, 134 to the first recesses 111, 112, 113, 114. There are further second slurry channels 141, 142 passing through the filter plate 100 at each end of the filter plate 100. There are further second connection channels 151, 152 leading from the bottom of the first recesses 111, 112, 113, 114 to the second slurry channels 141, 142.

The right side of the figure shows two filter plates positioned against each other as in the filter plate pack in the filter press. The first recesses 111, 113, 112, 114 form chambers 111, 113, 112, 114 for the slurry. The second recesses 131, 133, 132, 134 form first connection channels from the first slurry channel 120 into the interior of the chambers 111, 113, 112, 114. There are two filter cloths 41, 42 between the filter plates 100.

The filter plates 100 form a solid filter plate pack of sealed chambers with two filter cloths 41, 42 in between each pair of filter plates 100. The slurry enters into the chamber 111, 113, 112, 114 through the first slurry channel 120 and the first connection channels 131, 132, 133, 134. The slurry is pumped into all chambers 111, 113, 112, 114 simultaneously to form a filter cake on both sides of the chamber 111, 113, 112, 114. During filtration the solids are captured by the filter cloth 41, 42 on both sides of the chamber 111, 113, 112, 114 to form a cake with the filtrate displaced through the filter cloth 41, 42. The liquid passes through the filter cloth 41, 42 and is extracted through the second connection channels 151, 152 and the second slurry channels 141, 142 out from the filter press. After completion of the filtration, the filter plate 100 pack is opened and the cake is discharged.

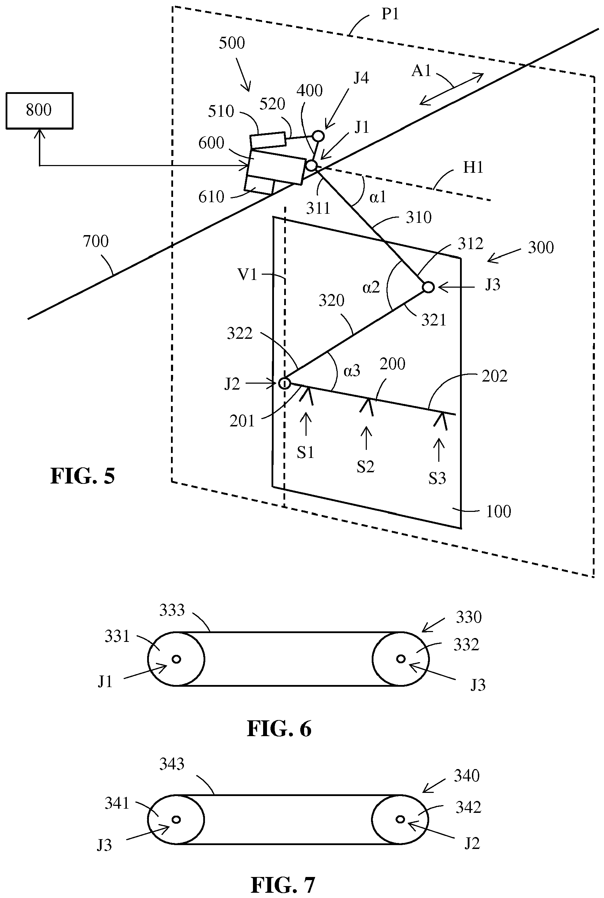

Figure 5 shows an apparatus for washing filter cloths in the filter press. The washing device comprises a spray bar 200 supported with a support arm 300 on a carrier 600 moving in the longitudinal direction A1 on a support structure 700 above the pack of filter plates 100. The support structure 700 extends in the longitudinal direction A1 along the length L1 of the filter press and forms a support rack for the carrier 600. The support arm 300 comprises a first end 311 and an opposite second end 322. The support arm 300 comprises further at least one articulated joint J3 between the first end 311 and the second end 322 of the support arm 300. The first end 311 of the support arm 300 is connected to the carrier 600 with a first articulated joint J1 and the second end 322 of the support arm 300 is connected to the spray bar 200 with a second articulated joint J2. The support arm 300 comprises in this embodiment only one articulated joint J3 between the first end 311 and the second end 322 of the support arm 300. The support arm 300 comprises thus two link arms 310, 320. A first end 311 of the first link arm 310 is connected with a first articulated joint J1 to the carrier 600. A second end 322 of the second link arm 320 is connected with a second articulated joint J2 to a first end 201 of the spray bar 200. A second end 312 of the first link arm 310 is connected with a third articulated joint J3 to a first end 321 of the second link arm 320. The second end 202 of the spray bar 200 is free. The first end 311 of the support arm 300 is formed of the first end 311 of the first link arm 310. The second end 322 of the support arm 300 is formed of the second end 322 of the second link arm 320.

A first end of a fourth link arm 400 is further connected to the first articulated joint J1 and a second end of the fourth link arm 400 is connected via a fourth articulated joint J4 to a second actuator 500. The first end of the third link arm 400 is also connected rigidly to the first end 311 of the first link arm 310 in the first articulated joint J1. Each articulated joint J1, J2, J3, J4 comprises an axis forming the centre of the turn action. The second actuator 500 can comprise a cylinder 510 with a piston 520. Linear movement of the piston 520 within the cylinder 510 will result in rotational movement of the third link arm 400 around the first articulated joint J1. Rotational movement of the third link arm 400 around the first articulated joint J1 will result in a corresponding rotational movement of the first link arm 310 around the first articulated joint J1. The cylinder 510 in the second actuator 500 is supported on the carrier 600. The spray bar 200 comprises spray outlets S1, S2, S3.

The angle between the first link arm 310 and the horizontal plane H1 is denoted α1. The angle between the first link arm 310 and the second link arm 320 is denoted α2. The angle between the second link arm 320 and the spray bar 200 is denoted α3.

The spray bar 200 can be lowered and raised with the second actuator 500 and the support arm 300 in a plane P1 extending between a pair of filter plates 100 when the pack of filter plates 100 is open. The spay bar 200 can be lowered to the lower horizontal edge 104 of the filter plate 100 and raised above the upper horizontal edge 103 of the filter plate 100. The figure shows for clarity reasons only one filter plate 100 at one side of the support device 300 and the spray bar 200. Washing fluid can be pumped with pressure from the spray nozzles S1, S2, S3 in opposite directions towards the filter cloths 41, 42 in order to wash the filter cloths 41, 42 when the spray bar 200 is lowered and raised between the pair of filter plates 100.

The spray bar 200 and the support arm 300 can further be transferred in the longitudinal direction A1 along the support structure 700 with the carrier 600. The carrier 600 is thus provided with a motor 610 for moving the carrier 600 along the support structure 700 in the longitudinal direction A1. The motor 610 can be an electric motor 610 provided with a cogwheel rotating on a toothed rack in the support structure 700. The spray bar 200 is first lifted upwards with the support arm 300 to an uppermost position above the upper horizontal edge 103 of the filter plates 100. The support arm 300 is in a folded position in the uppermost position. The spray bar 200 and the support arm 300 is then moved with the motor 610 in the carrier 600 along the support structure 700 to the next position where the spray bar 200 is again lowered downwards between a spaced apart pair of filter plates 100 in order to wash the cloths 41, 42 between the filter plates 100. The control of the washing apparatus i.e. the control of the movement of the support arm 300 as well as the control of the movement of the carrier 600 can be done by a control apparatus 800. The control apparatus 800 can be integrated to the control apparatus of the filter press.

Figure 6 shows first transmission means of the washing apparatus shown in figure 5. The first transmission means 330 is situated in connection with the first link arm 310. The first transmission means 330 comprises a first cogwheel 331 and a second cogwheel 332 and a first chain 333 running as a closed loop on the first cogwheel 331 and the second cogwheel 332. The centre of the first cogwheel 331 is supported rotatably on an axis in the first articulated joint J1, said axis being rigidly supported on the carrier 600. The centre of the second cogwheel 332 is supported rotatably on an axis in the third articulated joint J3.

Figure 7 shows a second detail of the washing apparatus shown in figure 5. The second transmission means 340 is situated in connection with the second link arm 320. The second transmission means 340 comprises a third cogwheel 341 and a fourth cogwheel 342 and a second chain 343 running as a closed loop on the third cogwheel 341 and the fourth cogwheel 342. The centre of the third cogwheel 341 is supported rotatably on the axis in the third articulated joint J3. The centre of the fourth cogwheel 342 is supported rotatably on an axis in the second articulated joint J3.

The first link arm 310 has the same length as the second link arm 320. The movement of the second link arm 320 is synchronized with the movement of the first link arm 310. The gear ratio between the first link arm 310 and the second link arm 320 can be chosen so that the second articulated joint J2 moves upwards and downwards along a vertical straight line V1. The gear ratio between the second link arm 320 and the spray bar 200 can on the other hand be chosen so that the spray bar 200 remains in a horizontal position when moving upwards and downwards. The gear ratio between the first link arm 310 and the second link arm 320 is advantageously chosen so that an increase with X degrees in the angle α1 between the first link arm 310 and the horizontal plane H1 increases the angle α2 between the first link arm 310 and the second link arm 320 with the double degrees i.e. with two times X degrees. The gear ratio between the second link arm 320 and the spray bar 200 is chosen so that the angle α2 between the second link arm 320 and the spray bar 200 increases X degrees.

The transmission means 330, 340 could instead of a chain 333, 343 running as a closed loop over two cogwheels 331, 332, 341, 342 be based on a cogged belt running as a closed loop over two cogged belt pulleys.

The support arm 300 in the embodiment in the figures comprises two link arms 310, 320, but the support arm 300 could naturally comprise three or more link arms. The support 300 arm would thus comprise two or more articulated joints J3.

The turning of the first link arm 310 around the first articulated joint J1 is achieved with an actuator means 500 comprising a cylinder 510 and a piston 520 and with a third link arm 400. The actuator means 500 could instead of a cylinder 510 and a piston 520 comprise on a motor. The motor could be an electric motor or a hydraulic motor or a pneumatic motor turning the first link arm 310 around the first articulated joint J1. The motor could act directly or through a transmission on the first end 311 of the first link arm 310 in the first articulated joint J1 in order to turn the first link arm 310 around the first articulated joint J1.

The invention is also not limited to the filter press shown in the figures 1-4. The washing device can be mounted into any filter press consisting of a pack of filter plates, which can be opened so that a space opens between a pair of filter plates so that the washing apparatus can move between the pair of filter plates.

The second end 322 of the second link arm 320 is in the figures attached to the first end 201 of the spray bar 200. The second end 322 of the second link arm 320 could naturally be attached to any point of the spray bar 200.

The support structure 700 of the apparatus is positioned above the pack of filter plates 100.

The first transmission means 330 could instead of the cogwheels and the chain comprise a first cogged belt pulley 331 supported rotatably on the carrier 400 with an axis in the first articulated joint J1, a second cogged belt pulley 332 supported rotatably on an axis in the third articulated joint J3, and a first cogged belt 333 forming a closed loop around the first cogged belt pulley 331 and the second cogged belt pulley 332. The second transmission means 340 could also instead of the cogwheels and the chain comprise a third cogged belt pulley 341 supported rotatably on an axis in the third articulated joint J3, a fourth cogged belt pulley 342 supported rotatably on an axis in the second articulated joint J2, and a second cogged belt 343 forming a closed loop around the third cogged belt pulley 341 and the fourth cogged belt pulley 342.

The movement of the support arm 300 moves the spray bar 200 in the plane P1 in a vertical sweep between an upper edge 103 and a lower edge 104 of the filter plates 100 so that the whole filter area of the pair of filter plates 100 becomes washed during the sweep of the spray bar 200 between the upper edge 103 and the lower edge 104 of the filter plates 100. The spray bar 200 extends advantageously over the whole width of the filter plate 100. The direction of the spray nozzles S1, S2, S3 at the opposite ends of the spray bar 200 could be inclined so that the sprays covers the whole filter plate 100 even if the spray bar 200 does not extend over the complete width of the filter plate 100.

The second articulated joint J2 moves advantageously along a vertical straight line V1 during the sweep of the spray bar 200.

When the support arm 300 is in a folded position i.e. in a transport position, the spray bar 200 is situated outside the circumference of the pack of filter plates 100, whereby the carrier 600 can move the support arm 300 and the spray bar 200 in the longitudinal direction A1.

The apparatus comprises actuator means 500 connected to the first link arm 310, first transmission means 330 connected to the first link arm 310, and second transmission means 340 connected to the second link arm 320, whereby the actuator means 500 turns the first link arm 310 around the first articulated joint J1, which results in that the first transmission means 330 turns the second link arm 320 around the third articulated joint J3 in synchronism with the turning of the first link arm 310, which in turn results in that the second transmission means 340 turns the spray bar 200 around the second articulated joint J2 in synchronism with the turning of the second link arm 320, whereby the first link arm 310 and the second link arm 320 are linked through the corresponding transmission means 330, 340 so that the actuator means 500 moves the spray bar 200 in the plane P1 in a vertical sweep between an upper edge 103 and a lower edge 104 of the filter plates 100 by keeping the spray bar 200 constantly in a horizontal position.

Upon reading the present application, it will be obvious to a person skilled in the art that the inventive concept can be implemented in various ways. The invention and its embodiments are not limited to the examples described above but may vary within the scope of the claims.

## Claims

1. A filter press comprising a pack of vertical filter plates (100) with filter cloths (41, 42) positioned between each pair of filter plates (100), the pack of filter plates (100) being positioned between two end plates (21, 22), at least one of the end plates (21, 22) being movable in order to close and open the pack of filter plates (100), a support structure (700) extending horizontally in a longitudinal direction (A1) above the pack of filter plates (100), and at least one apparatus for washing the filter cloths (41, 42), said washing apparatus comprising:
a carrier (600) supported on the support structure (700), said carrier (600) being movable along the support structure (700) in the longitudinal direction (A1),
a support arm (300) being composed of two link arms (310, 320), a first end (311) of a first link arm (310) being attached to the carrier (600) with a first articulated joint (J1), a second end (312) of the first link arm (310) being attached to a first end (321) of the second link arm (320) with a third articulated joint (J3),
a spray bar (200) being attached to a second end (322) of the second link arm (320) with a second articulated joint (J2),
actuator means (500) for turning the first link arm (310) around the first articulated joint (J1),
first transmission means (330) for turning the second link arm (320) around the third articulated joint (J3) in synchronism with the turning of the first link arm (310), the first transmission means (330) comprising a first cogwheel (331) or cogged belt pulley supported rotatably on the carrier (600) with an axis in the first articulated joint (J1), a second cogwheel (332) or cogged belt pulley supported rotatably on an axis in the third articulated joint (J3), and a first chain (333) or cogged belt forming a closed loop around the first cogwheel (331) and the second cogwheel (332),
second transmission means (340) for turning the spray bar (200) around the second articulated joint (J2) in synchronism with the turning of the second link arm (320), the second transmission means (340) comprising a third cogwheel (341) or cogged belt pulley supported rotatably on an axis in the third articulated joint (J3), a fourth cogwheel (342) or cogged belt pulley supported rotatably on an axis in the second articulated joint (J2), and a second chain (343) or cogged belt forming a closed loop around the third cogwheel (341) and the fourth cogwheel (342),
whereby the actuator means (500) moves the spray bar (200) in a plane (P1) between a spaced apart pair of filter plates (100) downwards to a lower edge (104) of the filter plates (100) and upwards above an upper edge (103) of the filter plates (100) in order to wash the filter clothes (41, 42) between two spaced apart filter plates (100) and the carrier (600) moves the support arm (300) and the spray bar (200) in the longitudinal direction (A1).

2. A filter press according to claim 1, **characterized in that** the actuator means (500) comprises a cylinder (510) piston (520) apparatus, whereby:
an outer end of the piston (520) is connected with a fourth articulated joint (J4) to a first end of a third link arm (400),
a second end of the third link arm (400) is rotatably supported on an axis in the first articulated joint (J1) and attached to the first end (311) of the first link arm (310), whereby the linear movement of the piston (520) within the cylinder (510) turns the third link arm (400) around the first articulated joint (J1) and thereby also the first link arm (310) around the first articulated joint (J1).

3. A filter press according to claim 1 or 2, **characterized in that** the carrier (600) comprises a motor (610) for moving the carrier (600) along the support structure (700) in the longitudinal direction (A1).

4. A filter press according to any one of claims 1 to 3, **characterized in that** the support arm (300) is arranged to move the spray bar (200) in the plane (P1) in a vertical sweep between an upper edge (103) and a lower edge (104) of the filter plates (100) so that the whole filter area of the pair of filter plates (100) becomes washed during the sweep of the spray bar (200) between the upper edge (103) and the lower edge (104) of the filter plates (100).

5. A filter press according to claim 4, **characterized in that** the second articulated joint (J2) is arranged to move along a vertical straight line (V1) during the sweep of the spray bar (200).

6. A filter press according to any one of claims 1 to 5, **characterized in that** when the support arm (300) is in a folded position i.e. in a transport position, the spray bar (200) is situated outside the circumference of the pack of filter plates (100), whereby the carrier (600) can move the support arm (300) and the spray bar (200) in the longitudinal direction (A1).

## Patentansprüche

1. Filterpresse, die einen Satz vertikaler Filterplatten (100) mit zwischen jedem Paar von Filterplatten (100) positionierten Filtertüchern (41, 42) umfasst, wobei der Satz von Filterplatten (100) zwischen zwei Endplatten (21, 22) positioniert ist, und wenigstens eine der Endplatten (21, 22) bewegt werden kann, um den Satz von Filterplatten (100) zu schließen und zu öffnen, eine Tragestruktur (700), die sich in einer Längsrichtung (A1) horizontal oberhalb des Satzes von Filterplatten (100) erstreckt, sowie wenigstens eine Vorrichtung zum Spülen der Filtertücher (41, 42), wobei die Spülvorrichtung umfasst:
einen Träger (600), der von der Tragestruktur (700) getragen wird, wobei der Träger (600) in der Längsrichtung (A1) an der Tragestruktur (700) entlang bewegt werden kann,
einen Trage-Arm (300), der aus zwei Gelenk-Armen (310, 320) besteht, wobei ein erstes Ende (311) eines ersten Gelenk-Arms (310) mit einer ersten Gelenkverbindung (J1) an dem Träger (600) angebracht ist, ein zweites Ende (312) des ersten Gelenk-Arms (310) mit einer dritten Gelenkverbindung (J3) an einem ersten Ende (321) des zweiten Gelenk-Arms (320) angebracht ist,
einen Spritzbalken (200), der mit einer zweiten Gelenkverbindung (J2) an einem zweiten Ende (322) des zweiten Gelenk-Arms (320) angebracht ist,
eine Betätigungseinrichtung (500), mit der der erste Gelenk-Arm (310) um die erste Gelenkverbindung (J1) herum gedreht wird,
eine erste Übertragungseinrichtung (330), mit der der zweite Gelenk-Arm (320) synchron zu dem Drehen des ersten Gelenk-Arms (310) um die dritte Gelenkverbindung (J3) herum gedreht wird, wobei die erste Übertragungseinrichtung (330) ein erstes Zahnrad (331) oder eine erste Zahn-Riemenscheibe, die mit einer Achse in der ersten Gelenkverbindung (J1) drehbar an dem Träger (600) gelagert ist, ein zweites Zahnrad (332) oder eine zweite Zahn-Riemenscheibe, die an einer Achse in der dritten Gelenkverbindung (J3) drehbar gelagert ist, sowie eine erste Kette (333) oder einen ersten Zahnriemen umfasst, der eine geschlossene Schleife um das erste Zahnrad (331) und das zweite Zahnrad (332) herum bildet,
eine zweite Übertragungseinrichtung (340), mit der der Spritzbalken (200) synchron zu dem Drehen des zweiten Gelenk-Arms (320) um die zweite Gelenkverbindung (J2) herum gedreht wird, wobei die zweite Übertragungseinrichtung (340) ein drittes Zahnrad (341) oder eine dritte Zahn-Riemenscheibe, die an einer Achse in der dritten Gelenkverbindung (J3) drehbar gelagert ist, ein viertes Zahnrad (342) oder eine vierte Zahn-Riemenscheibe, die an einer Achse in der zweiten Gelenkverbindung (J2) drehbar gelagert ist, sowie eine zweite Kette (343) oder einen zweiten Zahnriemen umfasst, der eine geschlossene Schleife um das dritte Zahnrad (341) und das vierte Zahnrad (342) herum bildet,
wobei die Betätigungseinrichtung (500) den Spritzbalken (200) in einer Ebene (P1) zwischen einem Paar beabstandeter Filterplatten (100) zu einem unteren Rand (104) der Filterplatten (100) nach unten und über einen oberen Rand (103) der Filterplatten (100) nach oben bewegt, um die Filtertücher (41, 42) zwischen zwei beabstandeten Filterplatten (100) zu spülen, und der Träger (600) den Trage-Arm (300) und den Spritzbalken (200) in der Längsrichtung (A1) bewegt.

2. Filterpresse nach Anspruch 1, **dadurch gekennzeichnet, dass** die Betätigungseinrichtung (500) eine Vorrichtung mit Zylinder (510) und Kolben (520) umfasst, wobei:
ein äußeres Ende des Kolbens (520) mit einer vierten Gelenkverbindung (J4) mit einem ersten Ende eines dritten Gelenk-Arms (400) verbunden ist,
ein zweites Ende des dritten Gelenk-Arms (400) an einer Achse in der ersten Gelenkverbindung (J1) drehbar gelagert und an dem ersten Ende (311) des ersten Gelenk-Arms (310) angebracht ist, so dass durch die lineare Bewegung des Kolbens (520) im Inneren des Zylinders (510) der dritte Gelenk-Arm (400) um die erste Gelenkverbindung (J1) herum und damit auch der erste Gelenk-Arm (310) um die erste Gelenkverbindung (J1) gedreht wird.

3. Filterpresse nach Anspruch 1 oder 2, **dadurch gekennzeichnet, dass** der Träger (600) einen Motor (610) umfasst, mit dem der Träger (600) in der Längsrichtung (A1) an der Tragestruktur (700) entlang bewegt wird.

4. Filterpresse nach einem der Ansprüche 1 bis 3, **dadurch gekennzeichnet, dass** der Trage-Arm (300) so eingerichtet ist, dass er den Spritzbalken (200) in der Ebene (P1) in einem vertikalen Hub zwischen einem oberen Rand (103) und einem unteren Rand (104) der Filterplatten (100) so bewegt, dass bei dem Hub des Spritzbalkens (200) zwischen dem oberen Rand (103) und dem unteren Rand (104) der Filterplatten (100) die gesamte Filterfläche der paarigen Filterplatten (100) gespült wird.

5. Filterpresse nach Anspruch 4, **dadurch gekennzeichnet, dass** die zweite Gelenkverbindung (J2) so eingerichtet ist, dass sie sich während des Hubs des Spritzbalkens (200) entlang einer geraden vertikalen Linie (V1) bewegt.

6. Filterpresse nach einem der Ansprüche 1 bis 5, **dadurch gekennzeichnet, dass**, wenn der Trage-Arm (300) eine eingeklappte Position, d. h. eine Transportposition, einnimmt, sich der Spritzbalken (200) außerhalb des Umfangs des Satzes von Filterplatten (100) befindet, so dass der Träger (600) den Trage-Arm (300) und den Spritzbalken (200) in der Längsrichtung (A1) bewegen kann.

## Revendications

1. Filtre-presse comprenant
un ensemble de plaques filtrantes verticales (100) avec des toiles de filtrage (41, 42) positionnées entre chaque paire de plaques filtrantes (100), l'ensemble de plaques filtrantes (100) étant positionné entre deux plaques d'extrémité (21, 22), au moins une des plaques d'extrémité (21, 22) étant mobile afin de fermer et d'ouvrir l'ensemble de plaques filtrantes (100),
une structure de support (700) s'étendant horizontalement dans une direction longitudinale (A1) au-dessus de l'ensemble de plaques filtrantes (100),
et au moins un dispositif pour un lavage des toiles de filtrage (41, 42), ledit dispositif de lavage comprenant :
un chariot (600) soutenu par la structure de support (700), ledit chariot (600) étant mobile le long de la structure de support (700) dans la direction longitudinale (A1),
un bras de soutien (300) étant composé de deux bras de liaison (310, 320), une première extrémité (311) d'un premier bras de liaison (310) étant fixée au chariot (600) par une première articulation (J1), une deuxième extrémité (312) du premier bras de liaison (310) étant fixée à une première extrémité (321) du deuxième bras de liaison (320) par une troisième articulation (J3),
une rampe de pulvérisation (200) étant fixée à une deuxième extrémité (322) du deuxième bras de liaison (320) par une deuxième articulation (J2),
un moyen formant actionneur (500) pour une rotation du premier bras de liaison (310) autour de la première articulation (J1),
un premier moyen de transmission (330) de rotation du deuxième bras de liaison (320) autour de la troisième articulation (J3) en synchronisme avec la rotation du premier bras de liaison (310), le premier moyen de transmission (330) comprenant une première roue dentée (331) ou poulie de courroie crantée soutenue dans sa rotation sur le chariot (600) avec un axe dans la première articulation (J1), une deuxième roue dentée (332) ou une poulie de courroie crantée soutenue dans sa rotation sur un axe dans la troisième articulation (J3), et une première chaîne (333) ou courroie crantée formant une boucle fermée autour de la première roue dentée (331) et la deuxième roue dentée (332),
un deuxième moyen de transmission (340) pour une rotation de la rampe de pulvérisation (200) autour de la deuxième articulation (J2) en synchronisme avec la rotation du deuxième bras de liaison (320), le deuxième moyen de transmission (340) comprenant une troisième roue dentée (341) ou poulie de courroie crantée soutenue dans sa rotation sur un axe dans la troisième articulation (J3), une quatrième roue dentée (342) ou poulie de courroie crantée soutenue dans sa rotation sur un axe dans la deuxième articulation (J2), et une deuxième chaîne (343) ou courroie crantée formant une boucle fermée autour de la troisième roue dentée (341) et la quatrième roue dentée (342),
par lequel le moyen formant actionneur (500) déplace la rampe de pulvérisation (200) dans un plan (P1) entre une paire de plaques filtrantes espacées (100) vers le bas vers un bord inférieur (104) des plaques filtrantes (100) et vers le haut au-dessus d'un bord supérieur (103) des plaques filtrantes (100) afin de laver les toiles de filtrage (41, 42) entre deux plaques filtrantes espacées (100) et le chariot (600) déplace le bras de soutien (300) et la rampe de pulvérisation (200) dans la direction longitudinale (A1).

2. Un filtre-presse selon la revendication 1, **caractérisé en ce que** le moyen formant actionneur (500) comprend un dispositif de piston (520) de cylindre (510), par lequel :
une extrémité extérieure du piston (520) est fixée par une quatrième articulation (J4) à une première extrémité d'un troisième bras de liaison (400),
une deuxième extrémité du troisième bras de liaison (400) est soutenue dans sa rotation sur un axe dans la première articulation (J1) et fixée à la première extrémité (311) du premier bras de liaison (310), par lequel le mouvement linéaire du piston (520) au sein du cylindre (510) tourne le troisième bras de liaison (400) autour de la première articulation (J1) et ainsi également le premier bras de liaison (310) autour de la première articulation (J1).

3. Un filtre-presse selon la revendication 1 ou 2, **caractérisé en ce que** le chariot (600) comprend un moteur (610) pour un déplacement du chariot (600) le long de la structure de soutien (700) dans la direction longitudinale (A1) .

4. Un filtre-presse selon l'une quelconque des revendications 1 à 3, **caractérisé en ce que** le bras de soutien (300) est disposé pour déplacer la rampe de pulvérisation (200) dans le plan (P1) dans un balayage vertical entre un bord supérieur (103) et un bord inférieur (104) des plaques filtrantes (100) de sorte que la zone de filtrage complète de la paire de plaques filtrantes (100) soit lavée pendant le balayage de la rampe de pulvérisation (200) entre l'arête supérieure (103) et l'arête inférieure (104) des plaques filtrantes (100) .

5. Un filtre-presse selon la revendication 4, **caractérisée en ce que** la deuxième articulation (J2) est disposée pour se déplacer le long d'une ligne droite verticale (V1) pendant le balayage de la rampe de pulvérisation (200).

6. Un filtre-presse selon l'une quelconque des revendications 1 à 5, **caractérisé en ce que** lorsque le bras de soutien (300) est dans une position pliée c'est-à-dire dans une position de transport, la rampe de pulvérisation (200) est située à l'extérieur de la circonférence de l'ensemble de plaques filtrantes (100), ainsi le chariot (600) peut déplacer le bras de soutien (300) et la rampe de pulvérisation (200) dans la direction longitudinale (A1).
